# EUROPEAN PATENT APPLICATION

(11) **EP 2 053 297 A2**
(43) Date of publication of application: **29.04.2009**
(21) Application number: 08166701.6
(22) Date of filing: 15.10.2008
(51) Int. Cl.: F16L 47/03

(54) **Coupling construction for high-pressure pipe**

(30) Priority: 15.10.2007 NL 2000933
(71) Applicant: Pipelife Nederland B.V., 1601 MA Enkhuizen (NL)
(72) Inventor: Cloos, Peter Jeroen, 1602 HZ Enkhuizen (NL); Dalmolen, Lambertus Gerrit Peter, 1019 SE Amsterdam (NL)
(74) Representative: van Westenbrugge, Andries

(57) **Abstract**

The invention relates to a coupling construction, comprising a coupling element and at least one high-pressure pipe, said high-pressure pipe comprising an external sheathing layer, a reinforcement layer and an internal lining. Said coupling comprises an internal welding sleeve, the external surface of which bears a helically wound heating element, as well as a force transfer element that acts cooperatively with the reinforcement layer. The heating element comprises a heating wire and a shell encompassing the heating wire. The welding sleeve and the sheathing layer are fused by material originating from the welding sleeve, the sheathing layer and from the shell encompassing the heating wire. The invention also comprises a welding sleeve for use in the coupling construction, as well as a method for producing a coupling construction.

## Description

The invention relates to a coupling construction, comprising a coupling 1 and at least one high-pressure pipe, said high-pressure pipe comprising an external sheathing layer a reinforcement layer and an internal lining, said coupling comprising an internal welding sleeve the external surface of which bears a helically wound heating element, as well as a force transfer element that acts cooperatively with the reinforcement layer.

Such a coupling construction is known in the prior art. In this known coupling construction, a metal heating wire, for example, a copper wire, is wound around the welding sleeve. Heating the heating wire causes the soft adjacent material of the welding sleeve and of the internal sheathing layer of the high-pressure pipe to melt. This means that a high-pressure resistant sealing must be obtained between the welding sleeve and the internal sheathing layer. Although such a construction suffices at relatively low pressures, problems tend to arise at high pressures, for example, above 20 bar. At such high pressures gas or fluid tends to escape along the metal wire. This escape is from the interior of the high-pressure pipe, namely in places where high pressures prevail. Melting the material of the welding sleeve of the internal lining doesn't seem to produce a connection to the metal wire that ensures a complete sealing. As a result, there are still leaks on the boundary surfaces between the metal wire and the surrounding plastic material.

Furthermore, it is known that in high-pressure pipes the internal layer can be sealingly connected to a flange construction by means of mirror welding, or to the internal sheathing layer of the neighboring high-pressure pipe. A sealing thus obtained by fusion welding is of a sufficiently sealing nature in relation to high pressures. However, in the production of mirror welds such problems occur that this process is not really well suited to the production of connections in the work, i.e. for use in an excavated ground trench. Such methods require the use of complex equipment which is vulnerable and can be easily damaged. Additionally, there is not much space available in the trench to place the equipment.

The object of the invention therefore, is to provide a coupling construction, whereby the couplings can be achieved by a much simpler but still very reliable means. This object can be achieved because the heating element comprises a heating wire and an outer shell surrounding said heating wire, and that the welding sleeve and the sheathing layer are fused by the material originating from the welding sleeve, the sheathing layer and the outer shell surrounding the heating wire.

In the coupling construction according to the invention, the weld between the welding sleeve and the internal sheathing layer is not achieved by means of a bare metal wire, but by means of a metal wire incorporated in a plastic outer shell. The plastic outer shell forms a good insulation in relation to high pressures, such that no pressure loss can occur along the metal wire. The plastic outer shell fuses with the plastic material of the welding sleeve and the internal sheathing layer so that no boundary surfaces result, along which leaks could take place.

The windings of the heating wire are preferably spaced at a certain distance from each other. This results in a regular and reliable sealing between the welding sleeve and internal sheathing layer.

The connections of the heating wire are preferably located in close proximity to the end of the pressure pipe. This enables the simple outward extension of the connections of the heating wire along the reinforcement layer and external lining layer, for the purpose of connecting to a power supply.

According to a further embodiment, the heating wire can be wound double so that both of the connections of the heating wire are located at one and the same end of the high-pressure pipe. In this connection, further provisions can be made so that the double wound heating wire is arranged to have two adjacent extending wire parts which are mutually connected to each at their respective ends by a wire part with a plastic outer shell. Since the connecting part between both wire parts is also lined with plastic material, this ensures that no leaks occur. In one particular embodiment, the wire parts and connecting wire part are disposed as a single integral part, which means that the wire part has a relatively strong bend at that location.

Furthermore, the welding sleeve can be provided with a surrounding collar, whereby the reinforcement layer and the internal sheathing layer are positioned opposite to said collar. Through this collar enables the connections of the heating wire extend.

The coupling construction can be arranged in different ways. According to a first option, the coupling is provided with a flange construction which is connected to the reinforcement layer so as to transfer force and which is sealingly connected to the sheathing layer. According to a second option, the coupling is arranged symmetrically and is connected at opposite ends to a respective high-pressure pipe.

The invention further relates to a welding sleeve for use in a coupling construction, as described hereinbefore, provided with an external surface on which a wound wire is disposed. According to the invention the wire is surrounded by an insulating outer shell. Additionally, the welding sleeve may comprise circumferential grooves at both ends for accommodation of sealings, such as O-rings, for providing an additional sealing with respect to the internal lining of the pipe.

The invention also relates to a method for the production of a coupling construction described hereinbefore, comprising the steps of:
- providing a coupling comprising a welding sleeve, the surface of which bears a helically wound heating element, said heating element comprising a heating wire (11) and an outer shell surrounding said heating wire,
- providing a high-pressure pipe comprising an external sheathing layer, a reinforcement layer and an internal lining,
- placing the welding sleeve against the lining,
- heating of the heating wire,
- heating of the outer shell of the heating wire,
- fusing of the material of the lining and the welding sleeve,
- filling the space between the lining and the welding sleeve with the molten material of the lining, the welding sleeve and the outer shell.

The outer shell of the heating wire, the sheathing layer and the sleeve are preferably of a similar material, such as polyethylene. Preferably, outer shell of the heating wire, the sheathing layer and the sleeve are of a material having similar melting points in such a way that these components fuse together. The thickness of the outer shell may be of the same order of magnitude as the thickness of the bare heating wire.

The invention will now be described in more detail according to several embodiments shown in the figures.
Figure 1 shows a detail of the first step in implementing the method according to the invention.
Figure 2 shows a detail of the complete coupling construction, obtained by implementing the method according to Figure 1.
Figure 3 shows a detail of an alternative to the first step according to Figure 1.
Figure 4 shows a detail of Figure 3.
Figure 5 shows a complete coupling construction.
Figures 6 and 7 show a second alternative to the complete coupling construction.
Figure 8 shows a third alternative embodiment.
Figure 9 shows a fourth alternative embodiment.

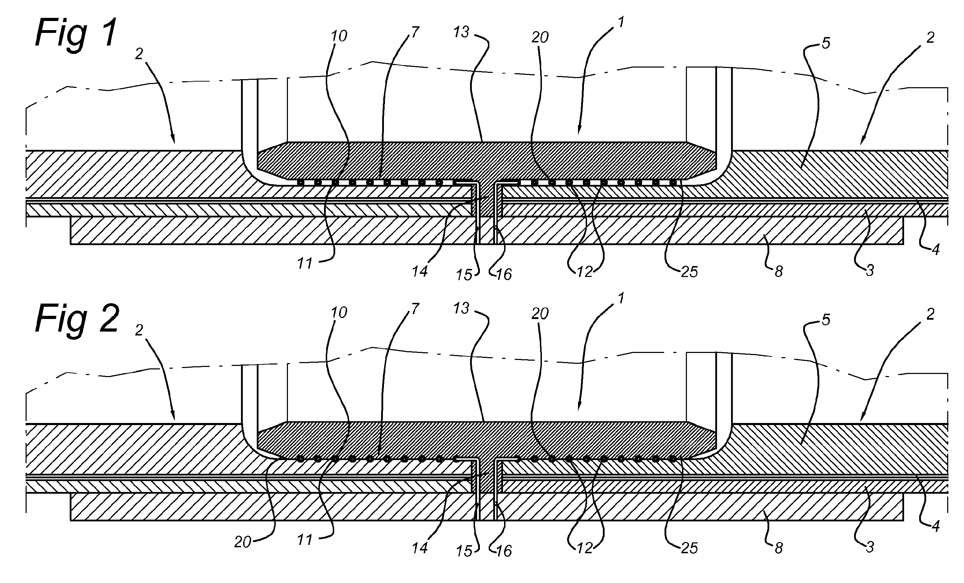

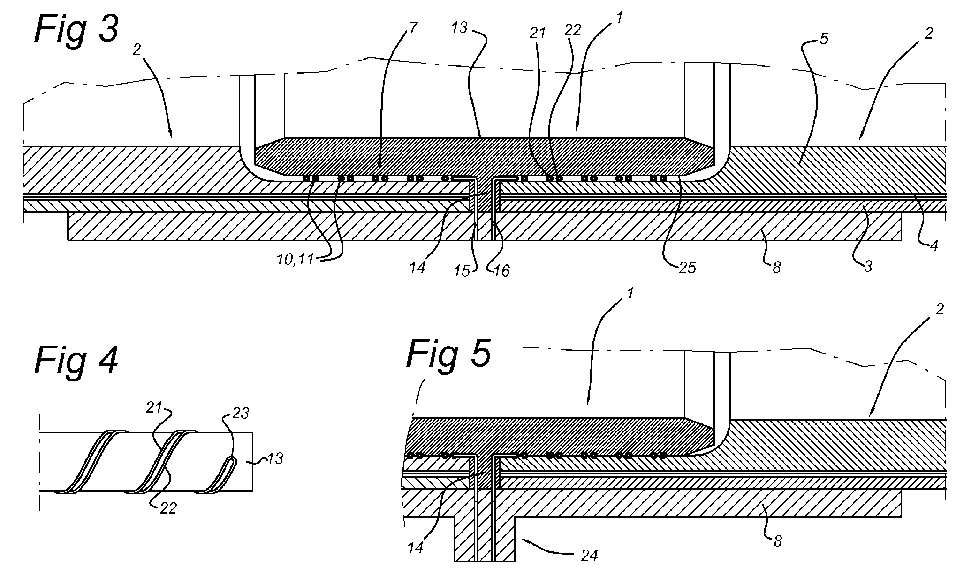

The step shown in Figure 1 of the implementation of the method according to the invention relates to the state in which the coupling construction, and specifically the welding sleeve thereof, still needs to be attached. This coupling construction comprises the coupling indicated in its entirety by the numeral 1, as well as the high-pressure pipes indicated by numeral 2. The high-pressure pipes each comprise an external sheathing layer 3, a reinforcement layer 4 and an internal lining 5; see also the complete coupling construction in Figure 5.

In turn, the coupling 1 comprises the welding sleeve 13, which is provided on its external surface 25 with the heating element 7 mounted with helically wound windings 12. This heating element 7 comprises a metal wire 10 and the insulating outer shell 11 surrounding said metal wire. This outer shell consists of a synthetic material. The heating element 7 further consists of the electrical connections 15, 16 which lead via the collar to the external surface of the power supply element 8.

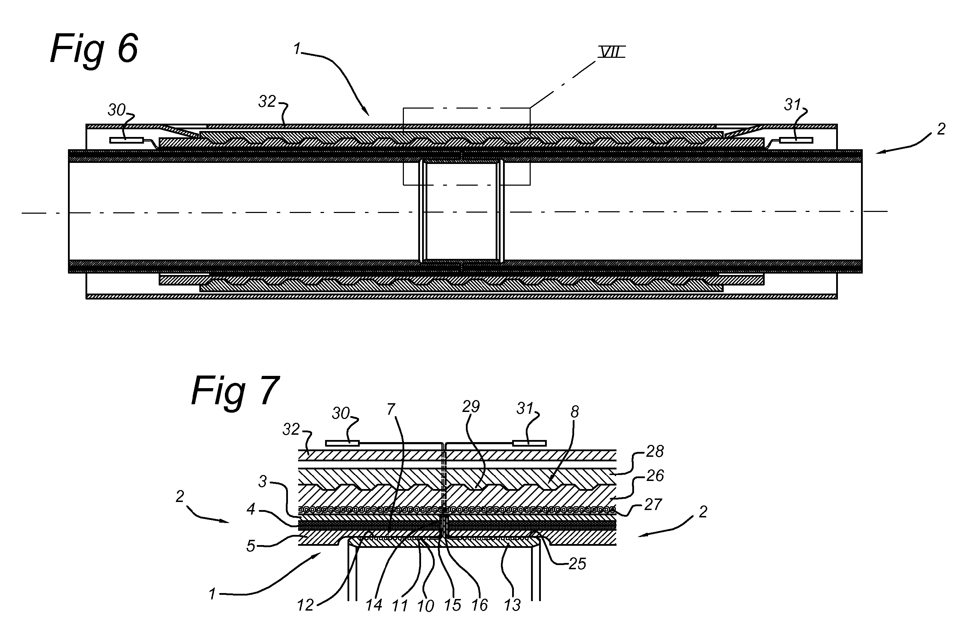

In the alternative embodiment of the figures 6 and 7, this power supply element 8 comprises the intermediate coupling sleeve 26, which is fused by means of a further heating wire 27 to the sheathing layer 3 of the high-pressure pipes 2. The element 8 further comprises the external sleeve 28 which engages with the intermediate coupling sleeve 26 by means of trapezoidal shapes, said external sleeve 28 being connected in such a way (not shown) with the reinforcement layers 4 of the high-pressure pipes 2, that the tensile forces prevailing within can be transferred. As indicated, the heating element 7 actually comprises on both sides of the collar 17 two windings 19, 20, each of which is connected to the connections 15, 16.

The electrical current which is applied to the connections 15, 16 causes the fusion of the plastic material of the outer shell 11 of the heating element 7, the plastic material of the welding sleeve 13, and the plastic material of the internal lining 3. This creates the state shown in Figure 2, whereby the heating wire 10 is embedded within and between the fused parts. However, since the heating wire 10 is located in the fused material of the outer shell 11, there is no risk of leakage. Nor can leakages occur if high pressures occur in the interior of the high-pressure pipes 2, such that the boundary surface between the welding sleeve 13 and the internal sheathing layers 3 are exposed to the high pressures at the ends 20. This is due to the fact that the metal wire 10 is well protected by the material of the outer shell 11, such that the threshold surfaces located between the metal wire 10 and the plastic material are not exposed to the medium which is at high pressures.

As indicated by the alternative embodiment of Figure 3, the heating element 7 may comprise a double helically wound wire 10. The double wound wire actually consists of a single continuous piece, the ends of which are connected to the connections 15, 16. This forms two wire parts 21, 22 which are connected to each other by the bent wire piece 23, as indicated in figure 4.

In the alternative embodiment shown in figures 1 to 4, the coupling construction is disposed between two high-pressure pipes 2. In the alternative embodiment of Figure 5 an alternative is shown whereby the coupling construction is connected to a single high-pressure pipe 2 which, further to this, has a flange 24. This flange 24 makes the coupling construction 1 according to Figure 5 suitable for connecting to a high-pressure pipe 2, for example, a drum, a closure valve etc.

In figure 7 the weld connections 30, 31 are mounted directly to the external side of a bush 32, and to that end said leads are directed radially through the flange 14, the intermediate coupling sleeve and the external sleeve 28. These weld connections 30, 31 are protected by means of a bush 32. In figure 5, the weld connections 30, 31 are lead outwards in an alternative manner via the intermediate sleeve 26.

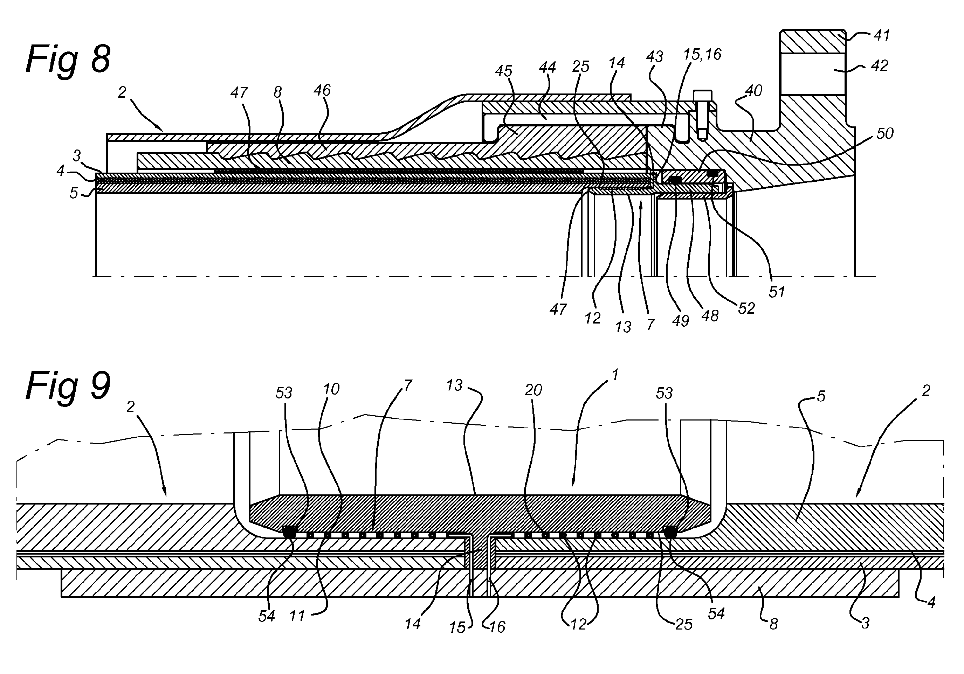

The alternative embodiment shown in Figure 8 relates to the application of the welding sleeve 13 in the flange connection. This flange connection comprises the flange body 40 which, on the one hand is provided with a flange 41 with fixture holes 42, and on the other hand with a collar 43, over which the hook connection is mounted. This hooked connection 44 is also hooked over the breast 45 which engages with the force transfer element 8 by means of the ribbed profile 46. This force transfer element 8 is fused in a manner known in the prior art by an electrical heating wire 47 with the external sheathing layer 3 of the high-pressure pipe. This high-pressure pipe 2 further consists of a reinforcement layer 4 and an internal lining 5.

The end of the internal lining 5, which is disposed towards the flange piece 40 has recess 47 in which the welding sleeve 13 is incorporated. The welding sleeve 13 and the internal recess 47 are fused together by means of the helically wound windings 12, the connections 15, 16 of which lead outwards via the collar 14.

The welding sleeve also possesses a coupling sleeve 48, sealed by the O-ring 49 in the auxiliary ring 50. This auxiliary ring 50 is, in turn, sealed in relation to the flange body 40 by means of a further O-ring 51. To reinforce the connection, the interior of the coupling sleeve 48 is provided with an internal ring 52.

The embodiment of figure 9 comprises a welding sleeve 13 provided with grooves 53 accommodating an O-ring 54 each. Said O-rings 54 provide additional sealing with respect to the inner wall of the internal lining 5.

## Claims

1. Coupling construction, comprising a coupling (1) and at least one high-pressure pipe (2), said high-pressure pipe (2) comprising an external sheathing layer (3), a reinforcement layer (4) and an internal lining (5), said coupling (1) comprising an internal welding sleeve (13) the external surface (25) of which bears a helically wound heating element (7), as well as a force transfer element (8) that acts cooperatively with the reinforcement layer (4), **characterized in that** the heating element (7) comprises a heating wire (10) and an outer shell (11) surrounding the heating wire (10), and that the welding sleeve (13) and the sheathing layer (3) are fused together by material originating from the welding sleeve (13), the sheathing layer (3) and from the surrounding outer shell (11) of the heating wire (10).

2. Coupling construction according to claim 1, whereby the windings (12) of the heating wire (10) are located at a certain distance from each other.

3. Coupling construction according to claim 1 or 2, whereby the connections (15, 16) of the heating wire (10) are located in close proximity to the end of the high-pressure pipe (2).

4. Coupling construction according any of the preceding claims, whereby the heating wire (10) is double wound, in such a manner that the connections (15, 16) of the heating wire (10) are both positioned at one and the same end of the high-pressure pipe (2).

5. Coupling construction according to any of the preceding claims, whereby the heating wire (10) is double wound and possesses two wire elements (21, 22) extending adjacent to each other, both of which are mutually connected at one of their ends.

6. Coupling construction according to any of the preceding claims, whereby the welding sleeve (5) is provided with a surrounding external collar (14), opposite to which the reinforcement layer (4) and the external lining layer (3) are disposed.

7. Coupling construction according to any of the preceding claims, whereby the coupling (1) is provided with a flange construction (24) connected with the reinforcement layer in such a way as to transfer force and which is connected as a sealing connection to the sheathing layer.

8. Coupling construction according to any of the preceding claims 1 to 6, whereby the coupling (1) is arranged symmetrically and is connected at opposite ends to a respective high-pressure pipe (2).

9. Coupling construction according to claim 7 or 8 whereby, when dependent on claim 6, the connections (15, 16) of the heating wire (2) extend through the collar (14).

10. Coupling construction according to any of the preceding claims, wherein the outer shell (11) of the heating wire (10), the sheathing layer (3) and the welding sleeve (5) are of a similar material, such as polyethylene.

11. Coupling construction according to any of the preceding claims, wherein additional sealing elements, such as O-rings (54), are provided at the ends of the welding sleeve (13).

12. Welding sleeve (13) for use in the coupling construction according to any of the preceding claims, provided with an external surface (25) onto which a wire (10) is wound, **characterized in that** the wire is lined by an insulating shell (11) of a similar material as the welding sleeve (13).

13. Welding sleeve (13) according to claim 12, whereby the wire (10) is double wound and comprises two wire elements (21, 22) extending adjacent to each other.

14. Welding sleeve (13) according to claim 12 or 13, whereby the electrical connections (15, 16) are positioned at one end of the external surface (25).

15. Method for the production of a coupling construction according to any of the preceding claims, comprising the steps of:
- providing a coupling (1) comprising a welding sleeve (5), the surface (6) of which bears a helically wound heating element (7), said heating element (7) comprising a heating wire (10) and an outer shell (11) encompassing said heating wire (10),
- providing a high-pressure pipe (2) comprising an external sheathing layer (3), a reinforcement layer (4) and an internal lining
- positioning the welding sleeve (13) adjacent to the lining,
- heating the heating wire (10), such as by electric current,
- melting the shell (11) of the heating wire (10),
- melting the material of the lining and the welding sleeve (13),
- filling the space between the lining and the welding sleeve (13) with the molten material of the lining (5), the welding sleeve (13) and the shell (11).
